# EUROPEAN PATENT APPLICATION

(11) **EP 4 450 802 A1**
(43) Date of publication of application: **23.10.2024**
(21) Application number: 23198079.8
(22) Date of filing: 18.09.2023
(51) Int. Cl.: F03D 3/00, F03D 3/06

(54) **VERTICAL ROTOR TURBINE AND ITS PRODUCTION METHOD**

(30) Priority: 19.04.2023 PT 2023118608
(71) Applicant: Thunder Trick - Sociedade de Energia Renovádel, Lda, 2720-364 Amadora (PT)
(72) Inventor: MARTINS DA COSTA BATISTA, NELSON ANTÓNIO, 2625-188 PÓVOA DE SANTA IRIA (PT)
(74) Representative: Patentree

(57) **Abstract**

The present description concerns a vertical rotor turbine and its production method. In the text, a vertical rotor turbine is described comprising at least one turbine blade comprising a central body with two ends and at least one frieze-shaped and aerodynamically shaped guide structure arranged transverse to the axis of the blade, wherein the two ends define between them an axis of the blade, wherein the turbine blade comprises at least one or more wings connected to one of the ends and wherein said wing protrudes from the central body of the blade in a direction towards the inside and/or outside of the rotor.

## Description

### TECHNICAL FIELD

The present description concerns a vertical rotor turbine and its production method.

### BACKGROUND

A growing need for decentralization of energy production from renewable sources has been stimulating investment and development of solutions that allow the use of wind energy available in urban environments. When necessary, these solutions must work integrated into existing urban solar installations.

Darrieus type vertical rotor turbines have unique technical characteristics that make them more suitable for urban environments over horizontal rotor turbines and Savonius type vertical rotor turbines. Among these technical advantages some stand out like, the ability to take advantage of turbulent winds prevalent in urban areas, almost inaudible operation, the ability to operate without having to position itself according to the orientation of the wind flow and a smaller number of components. Despite the large quantity and diversity of products, there is still a high demand for the development of turbines that can be integrated into urban environments to take advantage of the available wind energy, capable of adapting to the needs of installation locations and water turbines that can be installed without need for additional construction of dams or other structures to shape the flow current and speed.

Darrieus-type vertical rotor wind turbines were presented in document US1835018A by G. J. M. Darrieus, where different configurations for the shape of the turbine were presented. These turbines were developed considering fluid flows with little turbulence, presenting poor performance for fluid flows with high turbulence. The turbines presented in document US1835018A also present a natural inability related to their configuration to self-start at low fluid flow speeds. Turbines with the configurations presented in document US1835018A present vibrations and instability derived from the rotation of their blades.

In the turbine configurations presented in document US1835018A there is always a need for a compromise between self-starting and high-speed performance. To solve these problems, different solution proposals were presented, such as those presented in documents US6320273B1 with the use of extra components to optimize the blade pitch angle; in document US20100054936A1 with blades that change their shape; in document US20110025071A1 with a hybrid configuration between a Darrieus-type turbine and a Savonius-type turbine and in document CN111550367A with a collector that guides the fluid flow.

Document PT104100A presents a continuation of the central body of the blade represented by a single wing installed at the end presenting a configuration equal to the blade. The described configuration generates drag when the turbine is at high rotation, reducing turbine performance at high fluid flow speeds. The device presented in that document does not allow the control of the fluid flow at the end of the blades, reducing turbine performance.

Other documents, such as WO 2005/0745819A1 and US2020/025169A1 present an addition at the ends of the blades. These additions do not have any aerodynamic profile, thus not generating lift forces, serving only to restrict the flow of fluid flow through the end of the blade and the reduction of vortices at the ends of the blade.

Document GB2282996A presents aerodynamic winglets coupled to the main wings of an aircraft, which, when moved by means of actuators, serve to create extra support for steering deviation with longitudinal inclination and transverse inclination, allowing greater control of the airplane. The same winglets are also used to generate drag, increasing the ability to stop the aircraft. The innovation present in this description introduces structures into a set of one or more wings installed at the ends of the turbine blades that, appearing similar, have different functionalities, designs and structures. The wings also do not have actuators to modify their position. The wings are made up of different aerodynamic profiles along their body that optimize the air flow at different instances of operation of the vertical rotor turbine, this configuration is thus optimized so that drag is not generated when the turbine is at high rotation, allowing at the same time to control the air flow in the wake of the vertical rotor turbine and enabling it to have greater control over the rotation of the blades, optimizing the lift forces generated on its surface.

Documents EP2698532A1 and EP2696066A2 present a blade with a curved body that connects to a central tower that in turn connects to the generator. This type of blade configuration creates drag in the region close to the central tower, reducing the turbine performance while generating extra turbulence in the wake of the turbine.

Documents US20110025071A1 and EP2414223A1 have the ends of the turbine blades connected by discs which, as mentioned in the previous paragraph, generate extra drag and turbulence in the wake of the turbine.

Document US2015345473A1 presents structures at the ends and center of its blades, which serve as a connection and support for its flap reorientation system on the blades of the vertical rotor turbine, which generate drag to aid in self-starting and function as brakes when it reaches a certain rotation. These structures do not present any aerodynamic benefit. These structures, despite having some visual similarity with the innovation guiding structures present in this description, have different functionalities, structure and design. The guiding structures presented in the innovation present in this description and which are distributed throughout the body of the blades, have an aerodynamic shape that allows the flow of air mass to be redirected in order to obtain a greater aerodynamic gain from the blade, offering at the same time a control over the formation of the wake in the vertical rotor turbine.

Document GB2523133A presents different aerodynamic profiles for the blade body that improve turbine performance, none of them similar to the profile now described.

These facts are described in order to illustrate the technical problem solved by the embodiments of this document.

### GENERAL DESCRIPTION

The present description concerns a vertical rotor turbine and respective production method.

There are currently several models of wind turbines for generating electrical energy taking advantage of the force of air or water mass flows, as it is clear from the state of the art. It is an objective of the embodiments now described to obtain a technical solution that makes it possible to present an optimized vertical rotor turbine, taking advantage of the energy of air mass flows in an urban environment, or in other environments with similar characteristics. There is, in fact, a pressing need to develop a wind turbine optimized for maximum use of energy in urban areas, while controlling the turbulence of the flow in the wake of the turbine. In an urban environment, it is still essential to keep noise levels low, so wind turbines must also take this need into account.

The technology now presented concerns a vertical rotor turbine that comprises at least one component that is installed on the turbine blade **1** of a vertical rotor, for example of the Darrieus type, providing self-start at low fluid flow speeds without the need for extra components, which adds optimized performance for high speeds. These components also allow the flow control of the turbine wake, reducing turbulence, thus improving the turbine performance in converting the kinetic energy present in the displacement of the fluid mass into electrical energy.

The components now disclosed are especially suitable for installation on turbine blades **1** of a vertical rotor, for example of the Darrieus type, installed in places where fluid flows present a turbulent flow and a constant change of direction.

The vertical rotor turbine now disclosed comprises at least one turbine blade comprising a central body with two ends, wherein the two ends define between them a blade axis, wherein the turbine blade comprises at least one wing connected to one of the ends and wherein said wing protrudes from the central body of the blade in a centrifugal direction, ie., towards the inside or outside of the rotor. This aerodynamic profile of Darrieus-type vertical rotor turbine blades **1** provides self-starting at low fluid flow speeds without the aid of extra components and optimized performance for high speeds. In an embodiment, the central body comprises at least one frieze-shaped and aerodynamically shaped guide structure arranged transverse to the axis of the blade. Along the wing **2,** the aerodynamic profile is optimized to provide lift forces that assist in the turbine self-starting, control the vibration caused by the rotation of the blades around the rotor when it is at high rotation, help control turbine flow wake reducing turbulence and increasing turbine performance. Optionally, the turbine may further comprise at least one guide structure **4** connected along the central body of the turbine blade **1** that redirect the flow of the fluid around the body of the turbine blade **1,** controlling the flow and orientation relative to the orientation of rotation of the turbine blade **1.**

In an embodiment, the vertical rotor turbine may comprise at least one turbine blade comprising a central body with two ends, wherein the central body comprises at least one guide structure, wherein the two ends define a blade axis between them and the guide structure is positioned transverse to said blade axis, wherein the turbine blade comprises at least one wing connected to one of the ends, wherein said wing protrudes from the central body of the blade in a direction towards the inside and/or outside of the rotor, comprising longitudinally, a plurality of aerodynamic profiles with a plurality of angles of attack different from each other.

The vertical rotor turbine can comprise turbine blades of any shape or profile available on the market.

Turbines that install the components now disclosed on their blades are capable of self-starting at lower fluid flow speeds and with a more controlled, smooth rotation and with less vibration for higher rotation speeds. These components are also designed to reduce the noise generated by the turbine blades 1 by controlling the turbulence generated in the flow by the movement of the blades. The aforementioned components allow the control of the turbine wake flow, reducing turbulence, thus optimizing the turbine performance.

As disclosed, the vertical rotor turbine comprises a set of one or more wings **2** installed at the ends of the turbine blades **1,** consisting of different aerodynamic profiles **8** along its body. This configuration is thus optimized so that drag is not generated when the turbine is at high rotation, maintaining the ability to control the rotation of the blades, using a specific design for the wings **2,** optimizing the lift forces generated on their surface. The aerodynamic profiles **8** along the body of the wings **2** may have different angles of attack in order to maximize the starting torque of the vertical rotor turbine and/or optimize the lift forces generated on its surface when it is at high rotation.

The turbine now disclosed also allows limiting the flow of fluid through the end of the blade, using guide structures **4** installed along the body of the blade **1** and the set of one or more wings **2** installed at the ends of the blade **1.** In this way, the turbine obtains up to 30% of more performance optimizing the lift forces on the blades, compared to the state of the art.

In relation to the state of the art, the technology now disclosed also allows the elimination of extra components that allow the modification of the blades and their ends throughout the operation or during the installation of the turbine.

The wings **2** installed at the ends of the central body of the turbine blade **1** in groups of one or more units, when configured with different aerodynamic profiles **8** and angles of attack along its body, allow the optimization of the lift forces along its surface and to reduce drag for high rotation. This optimization is made taking into account the profile to be used and its angle of attack in certain sections of the wing **2,** the distance of that profile in relation to the center of the rotor and its relationship with the rotation of the wings. The wings are thus able to maintain a continuous lift force for different rotations of the turbine, which allows the blades **1** to be stabilized, reducing vibration in the generator and thus increasing the turbine durability. It is therefore possible to eliminate some of the components presented in the prior art, since the performance of the set of wings **2** is constant for different turbine installation locations. Reducing components not only reduces production costs but also increases turbine longevity.

In the turbine now presented, the wings **2** are only connected to the ends of the central chorus of the turbine blades **1,** allowing to avoid drag in the region of the central tower that generates additional turbulence in the wake of the turbine, reducing its performance.

Throughout the present application, the aerodynamic profile or wing profile of the turbine blade is considered to be the two-dimensional section designed to cause variation in the direction of the velocity of a fluid. This wing profile can be asymmetrical, like the one now disclosed, in which the profile cannot be divided by a straight line into two equal parts. It is considered that such a profile produces greater lift and moment and less drag.

Throughout this application, the following elements are considered to characterize the wing profile of the asymmetric turbine blade: the extrados which indicates the upper surface or line of the profile has a more accentuated curvature than the intrados which is the lower surface or line of the profile. In a symmetrical profile, both extrados and intrados will have the same curvature, where the average curvature line, in this case, will be coincident with the chord. In addition to these elements, the profile also comprises a leading edge which is the front end of the profile, a trailing edge which is the rear end of the profile, the chord which is the straight line connecting the leading edge to the trailing edge and the midline that represents the equidistant line between the intrados and the extrados.

The present application describes a vertical rotor turbine comprising at least one turbine blade comprising a central body with two ends, wherein the two ends define between them a blade axis, wherein the turbine blade comprises at least one or more wings connected to one of the ends, wherein said wing protrudes from the central body of the blade in a direction towards the inside or outside of the rotor.

In an embodiment, the central body of the turbine blade used in the turbine now presented comprises at least one frieze-shaped guide structure arranged transverse to the axis of the blade.

In an embodiment, the turbine blade used in the turbine now presented comprises one or more wings connected to one of the ends, wherein the wing protrudes from the blade in a direction towards the inside or outside of the rotor or protrudes from the blade in a direction extending from the blade axis.

In an embodiment, the wing may comprise different aerodynamic profiles and respective angles of attack along its body. The wing may comprise along its body, that is, longitudinally, a plurality of aerodynamic profiles with angles of attack comprised between -90° to 90°.

In an embodiment, at least part of the turbine blade used in the turbine now presented, has a cross section with a leading edge and a trailing edge, wherein a chord line, which straightly connects the leading edge and the trailing edge, and which has a portion proximal to the leading edge comprised within the turbine blade and a portion proximal to the trailing edge traversing the exterior of the turbine blade.

In an embodiment, the turbine blade used in the turbine now presented has an intrados surface and an extrados surface, wherein the intrados surface has a convex portion proximal to the leading edge and a concave portion proximal to the trailing edge.

In an embodiment, the transverse section of the intrados and extrados of the turbine presents a decreasing curvature towards the ends of said turbine blade.

In an embodiment, the central body of the turbine blade used in the turbine now shown, has a wing profile defined by a series of turbine blade sections arranged sequentially relative to each other.

In an embodiment, the turbine blade sections used in the turbine now presented have cross sections with different configurations.

In an embodiment, the central body of the turbine blade used in the turbine now presented comprises an arm for connection to the rotor.

In an embodiment, the orientation angle of the wings used in the turbine relative to the rotor and the position of the blade varies between -90° and 240°, preferably between 0° and 180°, more preferably between 10° and 170°.

In an embodiment, the central body of the turbine blade used in the turbine has a distance in relation to its central axis comprised between 0% and 50% of the height of the turbine blade, preferably between 2% and 30% of the height of the turbine blade, more preferably between 2% and 20% of the turbine blade height.

In an embodiment, the central body of the turbine blade used in the turbine now presented has a substantially linear configuration.

In an embodiment, the central body of the turbine blade used in the turbine now presented has a helical configuration.

The present application also describes a method of producing a vertical rotor turbine, which comprises the steps of: arranging a rotor for a vertical rotor turbine; mounting on the rotor at least one turbine blade comprising a central body with two ends and at least one frieze-shaped and aerodynamically shaped guide structure arranged transverse to the axis of the blade, wherein the two ends define between them an axis of the blade, wherein the turbine blade comprises at least one or more wings connected to one of the ends, wherein said wing protrudes from the central body of the blade in a centrifugal direction, i.e., towards the inside or outside of the rotor.

### BRIEF DESCRIPTION OF FIGURES

For an easier understanding, figures are herein attached, which represent preferred embodiments that are not intended to limit the object of the present description.
**Figure 1****:** Schematic representation of an embodiment of the vertical rotor turbine with helically shaped turbine blades (1) connected to the rotor by means of arms (3), with groups of two wings (2) at each end and guide structures (4) on its body.
**Figure 2****:** Schematic representation of an embodiment of the vertical rotor turbine with turbine blades (1), with linear shaped turbine blades (1), in isometric perspective and top view, showing the wings (2), arms (3) and guide structures (4).
**Figure 3****:** Schematic representation of the horizontal plane (5) and vertical plane (6) of the orientation that the fluid flow can present in relation to the positioning of the vertical rotor turbine.
**Figure 4****:** Schematic representation of the various components of the vertical rotor turbine blade.
**Figure 5****:** Schematic representation of traditional shapes of the vertical rotor turbine blade (1), with front view (L1, L2 and L3) and top view (L4, L5 and L6), presenting sets of wings (2) at the ends and arms (3).
**Figure 6****:** Schematic representation of different embodiments of the sets (L7, L8, L9 and L10) of wings (2) in isometric perspective that the vertical rotor turbine blades (1) can present, including guide structures (4) in the body of the turbine blade (1).
**Figure 7****:** Schematic representation of a turbine blade (1) with the wing profile (9) and with a set of two wings (2) at its end with different aerodynamic profiles (8) along its body.
**Figure 8****:** Schematic representation of the wing profiles (9) of the turbine blade (1) developed.

In the previously mentioned figures, the following elements are indicated with reference numbers:
1-turbine blade;
2-wing;
3-arm;
4-guide structure;
5-horizontal plane;
6-vertical plane;
7-wing orientation angle relative to the rotor and blade position;
8-aerodynamic profiles;
9-wing profile;
10-extrados;
11-intrados;
12-leading edge;
13-central axis of the turbine blade;
14-distance to the central axis of the turbine blade;
15-trailing edge.

### DETAILED DESCRIPTION

The present description concerns a vertical rotor turbine, production method and its uses.

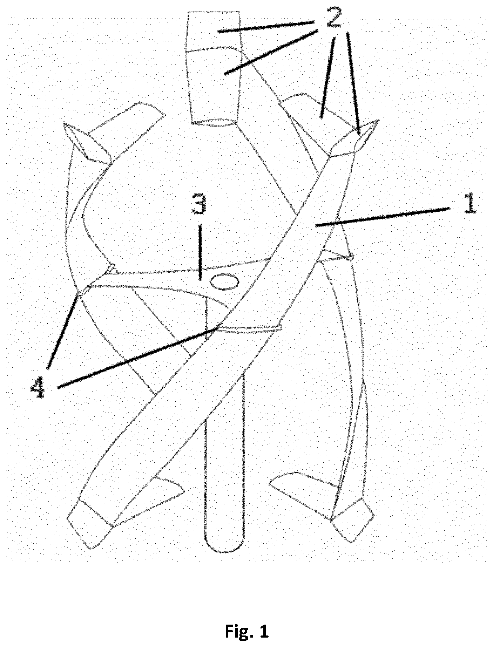

The configuration of vertical rotor turbines, for example of the Darrieus type, generally found on the market consists of one or more turbine blades **1,** which can be connected to the generator through the use of arms **3,** and can have different shapes as shown in **Figure 1****,** **Figure 2** and **Figure 5** with front view (L1, L2 and L3) and top view (L4, L5 and L6). The technology now disclosed can be installed on turbine blades **1,** increasing the performance of the vertical rotor turbine, enabling both self-start and turbulence control in the wake of the turbine, providing optimized performance in the conversion of kinetic energy into electrical energy for high fluid flow velocities, without compromising self-start for speeds equal to or less than 2 m/s.

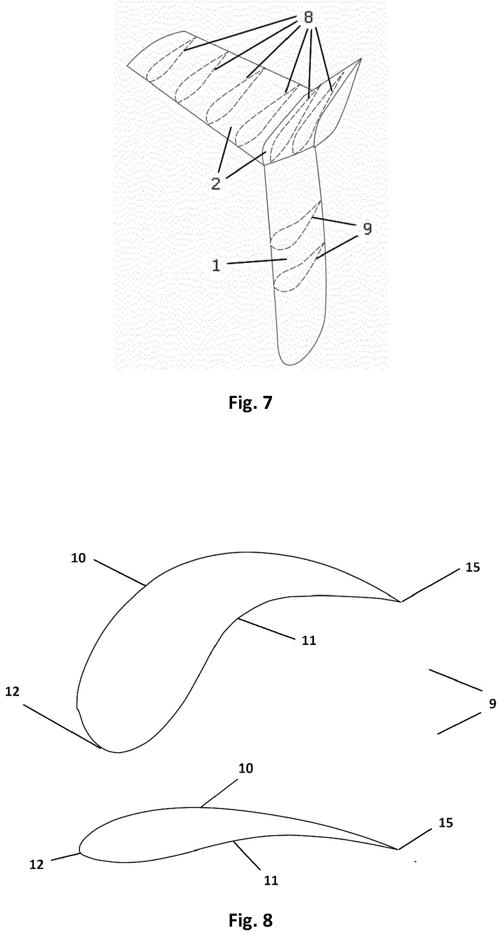

In an embodiment, the present disclosure introduces a wing profile **9** illustrated in **Figure 8****,** which can present one of the innovative shapes along the central body of the turbine blade **1,** giving it its aerodynamic shape. This wing profile **9** of the vertical rotor turbine blades **1** will allow it to be self-starting at low fluid flow speeds without the aid of extra components and optimized performance for high speeds.

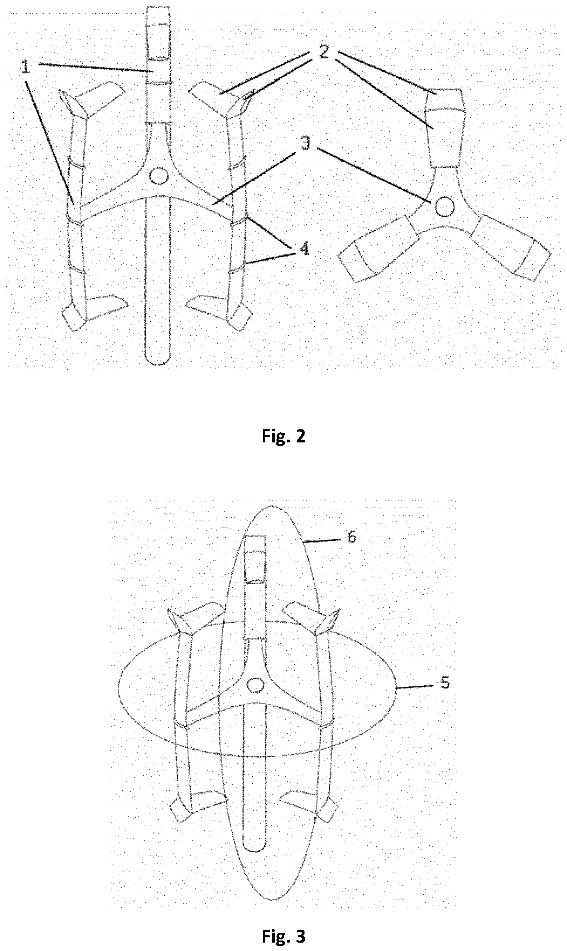

In an embodiment, illustrated in **Figure 3****,** there is a schematic representation of horizontal plane **5** and vertical plane **6** of the orientation that the fluid flow can present in relation to the positioning of the vertical rotor turbine. It is thus verified that the existence of at least two flows perpendicular to each other is perfectly possible.

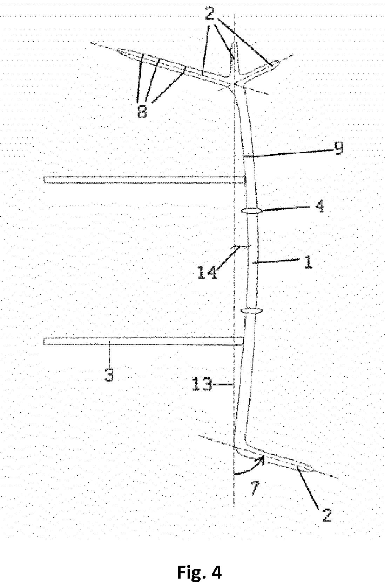

In an embodiment, illustrated in **Figure 4****,** it is possible to verify the existence of a set of different components of the vertical rotor turbine blade **1,** namely the existence of sets of wings **2** at the ends of the central body of the turbine blade **1** with an aerodynamic profile **8,** at least one arm **3** that connects to the rotor, at least one frieze-shaped guide structure **4** arranged transverse to the blade axis that allows greater stability of the turbine blade **1** and an wing profile **9** with a curvature such that once the central axis of the turbine blade **13** has been determined, there is a distance to the central axis of the turbine blade **14.** The angle of orientation of the wings relative to the rotor and to the position of the blade **7** varies between -90° and 240°, preferably between 0° and 180°, more preferably between 10° and 170°

In an embodiment, the vertical rotor turbine blades **1** present a curvature of the body of the turbine blade **1** outwards with a distance **14** in relation to the central axis **13** of the turbine blade **1,** which together with the arms **3** adds structural rigidity to the installation. This distance **14** is comprised between 0% and 50% of the height of the turbine blade, preferably between 2% and 30% of the height of the turbine blade, more preferably between 2% and 20% of the height of the turbine blade.

In an embodiment, guide structures **4** are connected along the body of the turbine blade **1** that reorient the fluid flow around the body of the turbine blade **1,** controlling the flow and orientation in relation to the rotational orientation of said turbine blade **1.** Guide structures **4** enable the control of the fluid flow not only when it is oriented in a horizontal plane **5** as well as in a vertical plane **6.** Guide structures **4** make it possible to orient the fluid flow in order to reduce turbulence in the turbine wake.

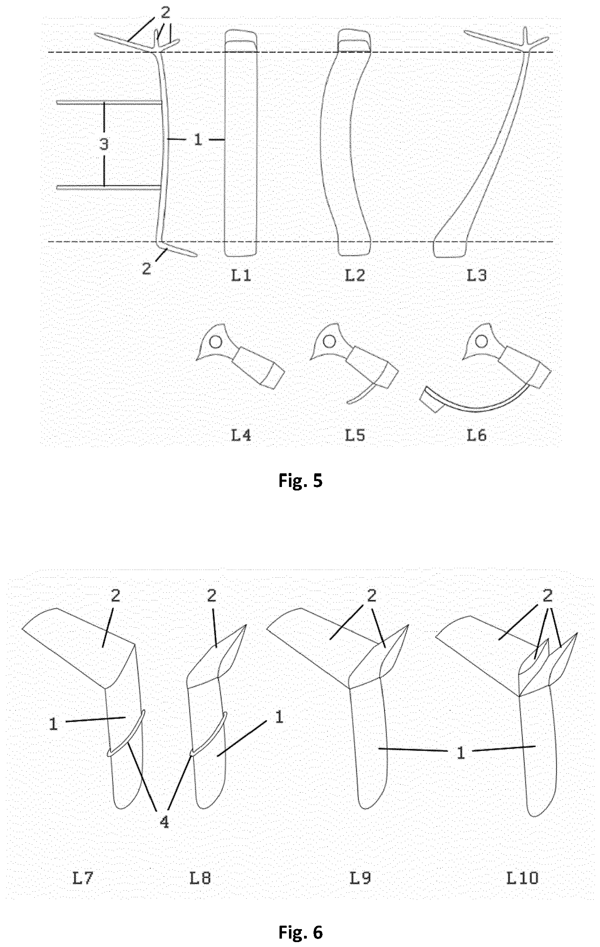

At the ends of the turbine blades **1,** sets of one or more wings **2** are installed, with configurations that can be different at the opposite ends, depending on the needs of the turbine in relation to the installation location and installation distance in relation to other turbines. Examples of configuration types are shown in **Figure 6** at L7, L8, L9 and L10. Each wing **2** consists of different aerodynamic profiles **8** distributed along the body as shown in **Figure 7** and positioned with an orientation towards the inside or outside of the rotor, with an angle **7** relative to the central axis **13** of the turbine blade **1,** optimizing the turbine performance and its behavior when at high rotation or in self-start. The different aerodynamic profiles **8** distributed along the body of the wing **2** can present different angles of attack to improve the self-start of the vertical rotor turbine and/or optimize the lift forces generated on the surface of the wings **2** when at high rotation. When the vertical rotor turbine, for example of the Darrieus type, is at high rotation, the lift forces generated on the surface of the wings **2** allow the blades to stabilize, reducing vibration in the generator. The shape of the wings **2** allows the control of vortices generated at the ends of the blades **1,** optimizing turbulence in the wake of the turbine. By controlling the formation of the turbine wake, it is possible to install several Darrieus-type vertical rotor turbines closer together. The wings **2** allow to reduce the flow of fluid from the intrados **11** of the turbine blade **1** to the extrados **10,** enabling greater use of lift forces on the surface of the turbine blade **1** and reduction of vortices at the ends.

The term "comprises" or "comprising" when used herein is intended to indicate the presence of stated features, elements, integers, steps and components, but not to preclude the presence or addition of one or more other features, elements, integers, steps and components, or groups thereof.

The present invention is, of course, in no way restricted to the embodiments described in this document and a person with average knowledge in the art will be able to foresee many possibilities for modifying it and replacing technical features with equivalent ones, depending on the requirements of each situation, as defined in the appended claims.

The following claims define additional embodiments of the present description.

## Claims

1. Vertical rotor turbine comprising at least one turbine blade comprising a central body with two ends, wherein the central body comprises at least one guide structure, wherein the two ends define between them an axis of the blade and the guide structure is placed transverse to said axis of the blade,
wherein the turbine blade comprises at least one wing connected to one of the ends, wherein said wing protrudes from the central body of the blade in a direction towards the inside and/or outside of the rotor, comprising longitudinally, a plurality of aerodynamic profiles with a plurality of angles of attack different from each other.

2. Turbine according to the preceding claim, wherein the central body of the turbine blade comprises at least one frieze-shaped guide structure and arranged aerodynamically and transverse to the axis of the blade.

3. Turbine according to any one of the preceding claims, wherein the turbine blade comprises one or more additional wings connected to one of the ends, wherein the additional wing protrudes from the blade in a direction towards the inside and/or outside of the rotor or protrudes from the blade in a direction extending from the blade axis.

4. Turbine according to the previous claim, wherein the wing comprises, along its body, a plurality of aerodynamic profiles with angles of attack comprised between -90° to 90°.

5. Turbine according to any one of the preceding claims, wherein at least part of the turbine blade has a cross section with a leading edge and a trailing edge, wherein a chord line straightly connecting the leading edge and the trailing edge, and which has a portion proximal to the leading edge comprised within the turbine blade and a portion proximal to the trailing edge traversing the exterior of the turbine blade.

6. Turbine according to any one of the preceding claims, wherein the turbine blade has an intrados surface and an extrados surface, wherein the intrados surface has a convex portion proximal to the leading edge and a concave portion proximal to the trailing edge.

7. Turbine according to any one of the preceding claims, wherein the cross-section of the intrados and the extrados has a decreasing curvature towards the ends of said turbine blade.

8. Turbine according to any one of the preceding claims, wherein the central body of the turbine blade has a wing profile defined by a series of turbine blade sections arranged sequentially relative to one another.

9. Turbine according to any one of the preceding claims, wherein said turbine blade sections have cross-sections with distinct configurations.

10. Turbine according to any one of the preceding claims, wherein the central body of the turbine blade comprises an arm for connection to the rotor.

11. Turbine according to any one of the preceding claims, wherein the angle of orientation of the wings with respect to the rotor and to the position of the blade varies between -90° and 240°, preferably between 0° and 180°, more preferably between 10° and 170°.

12. Turbine according to any one of the preceding claims, wherein the central body of the turbine blade has a curvature with a distance relative to its central axis of the blade comprised between 0% and 50% of the height of the turbine blade, preferably between 2% and 30% of the turbine blade height, more preferably between 2% and 20% of the turbine blade height.

13. Turbine according to any one of the preceding claims, wherein the central body of the turbine blade has a substantially linear configuration.

14. Vertical rotor turbine according to any one of claims 1 to 11, wherein the central body of the turbine blade has a helical configuration.

15. Vertical rotor turbine production method, comprising the steps of:
arranging a rotor for a vertical rotor turbine;
mounting on the rotor at least one turbine blade comprising a central body with two ends and at least one frieze-shaped and aerodynamically shaped guide structure arranged transverse to the axis of the blade, wherein the two ends define between them an axis of the blade, wherein the turbine blade comprises at least one or more wings connected to one of the ends, wherein said wing protrudes from the central body of the blade in a direction towards the inside and/or outside of the rotor.
